Europäisches Patentamt

European Patent Office

Office européen des brevets

(19)

(11) EP 0 757 520 B1

(12) **EUROPÄISCHE PATENTSCHRIFT**

(45) Veröffentlichungstag und Bekanntmachung des Hinweises auf die Patenterteilung:
**22.07.1998 Patentblatt 1998/30**

(21) Anmeldenummer: 95915195.2

(22) Anmeldetag: 08.04.1995

(51) Int. Cl.$^6$: **A01N 59/12**

(86) Internationale Anmeldenummer:
**PCT/EP95/01299**

(87) Internationale Veröffentlichungsnummer:
**WO 95/28841 (02.11.1995 Gazette 1995/47)**

(54) **IODOPHOR AUS POLY-N-VINYLLACTAM UND DEXTRIN**

IODOPHOR COMPRISING POLY-N-VINYLLACTAM AND DEXTRIN

IODOPHORE CONSTITUE DE POLY-N-VINYLLACTAME ET DE DEXTRINE

(84) Benannte Vertragsstaaten:
**AT BE CH DE DK ES FR GB GR IE IT LI NL PT SE**

(30) Priorität: **23.04.1994 DE 4414254**

(43) Veröffentlichungstag der Anmeldung:
**12.02.1997 Patentblatt 1997/07**

(73) Patentinhaber:
**BASF AKTIENGESELLSCHAFT**
**67056 Ludwigshafen (DE)**

(72) Erfinder:
• **BREITENBACH, Jörg**
  **D-53545 Linz (DE)**
• **SANNER, Axel**
  **D-67227 Frankenthal (DE)**
• **THOMA, Dietrich**
  **D-68219 Mannheim (DE)**

(56) Entgegenhaltungen:
**EP-A- 0 526 800**          **US-A- 4 719 106**

**Beschreibung**

Die Erfindung betrifft ein hinsichtlich der Eigenschaften und der Einfachheit der Herstellungsweise verbessertes Iodophor, wobei der Träger aus einer Mischung von Dextrin mit einem Poly-N-vinyllactam, nämlich Poly-N-vinylpyrrolidon (PVP oder Polyvidon) oder Poly-N-vinylcaprolactam, besteht.

Auf dem Gebiet der Feindesinfektionsmittel ist PVP-Iod ein lange etabliertes, jedoch kostenintensives Produkt. Auch die Herstellung von Saccharid-haltigen Iodophoren durch Polymerisation von Vinylpyrrolidon in Anwesenheit der jeweiligen Oligo- oder Polysaccharide ist aus EP-A-526 800 bekannt. Derartige Produkte sind zwar preiswerter als PVP-Iod, aber entsprechen nicht den Anforderungen an PVP-Iod. Außerdem sind sie bisher pharmakologisch nicht akzeptiert.

EP-B-196 813 beschreibt Mischungen von PVP-Iod mit Zucker, EP-A-259 982 mit Zuckeralkoholen und gegebenenfalls Zucker, EP-A-213 717 mit Zucker und einem gelierenden Polysaccharid. Die Herstellung ist umständlich, denn es muß zunächst das PVP-Iod hergestellt und dieses anschließend mit dem (den) Zusatzstoff(en) abgemischt werden. Ein direktes Mischen aller Komponenten ist nicht möglich. Außerdem sind die Produkte für pharmazeutische Zwecke nicht geeignet, weil ihr verfügbarer Iodgehalt, der Gehalt an freiem Iod sowie der Iodverlust in der Regel außerhalb des von den Gesundheitsämtern zugelassenen Bereichs liegt.

US 4 719 106 beschreibt Mischungen aus Polydextrose-Iod und PVP-Iod. Die Herstellung von Polydextrose für diesen Einsatzbereich ist umständlich und unwirtschaftlich: Zunächst werden Polysaccharide in Glukose zerlegt, dann wird diese in Gegenwart von Sorbit und Zitronensäure wieder polykondensiert (vgl. EP 380 248).

Der Erfindung lag die Aufgabe zugrunde, ein einfaches und wirtschaftliches Verfahren zur Herstellung eines Iodophors zu entwickeln, das in allen Punkten den Anforderungen an PVP-Iod entspricht.

Es wurde nun gefunden, daß diese Aufgabe gelöst werden kann, indem man eine Mischung von PVP oder Poly-N-vinylcaprolactam und Dextrin mit einem Dextroseäquivalent (DE-Wert) im Bereich von 2 bis 40, vorzugsweise 10 bis 30, in üblicher Weise zum Iod-komplex umsetzt.

Die Dextrine sind handelsüblich und in einfacher Weise aus Stärke durch unvollständige Hydrolyse mit verdünnter Säure, durch Hitzeeinwirkung sowie durch oxidativen oder enzymatischen Abbau mit Hilfe von Amylasen zugänglich.

Durch Hydrolyse in wäßriger Phase erhältliche Stärkeabbauprodukte eines gewichtsmittleren Molekulargewichtes von 2500 bis 25000 werden im Unterschied zu den Röstdextrinen üblicherweise als verzuckerte Stärken bezeichnet und sind als solche im Handel erhältlich.

Derartige verzuckerte Stärken sind von den Röstdextrinen u.a. dadurch chemisch verschieden, daß bei einem hydrolytischen Abbau in wäßrigem Medium (üblicherweise Suspensionen oder Lösungen), der in der Regel bei Feststoffgehalten von 10 bis 30 Gew.-% sowie vorzugsweise säure- oder enzymkatalysiert vorgenommen wird, die Möglichkeit der Rekombination und Verzweigung im wesentlichen nicht gegeben ist, was sich nicht zuletzt auch in anderen Molekulargewichtsverteilungen äußert.

Die Herstellung verzuckerter Stärken ist allgemein bekannt und u.a. in Günther Tegge, Stärke und Stärkederivate, Behr's Verlag, Hamburg 1984, S. 173 und S. 220 ff sowie in der EP-A 441 197 beschrieben. Vorzugsweise handelt es sich bei den erfindungsgemäß zu verwendenden verzuckerten Stärken um solche, deren gewichtsmittleres Molekulargewicht $M_w$ im Bereich von 4000 bis 16000, besonders bevorzugt im Bereich von 6500 bis 13000 liegt.

Die erfindungsgemäß zu verwendenden verzuckerten Stärken sind normalerweise bei Raumtemperatur in Wasser vollständig löslich, wobei die Löslichkeitsgrenze in der Regel oberhalb von 50 Gew.-% liegt. Vorzugsweise sind die Lösungen bei Raumtemperatur bei 10 bis 20 Gew.-%, besonders bevorzugt bei 30 bis 40 Gew.-% klar löslich und nicht kolloidal suspendiert.

Darüber hinaus ist es empfehlenswert, solche erfindungsgemäß zu verwendenden verzuckerten Stärken anzuwenden, deren Dextrose-äquivalent DE 2 bis 40, vorzugsweise 10 bis 30 und besonders bevorzugt 10 bis 20 beträgt. Der DE-Wert charakterisiert das Reduktionsvermögen bezogen auf das Reduktionsvermögen von wasserfreier Dextrose und wird nach DIN 10 308, Ausgabe 5.71, des Deutschen Normenausschusses Lebensmittel und landwirtschaftliche Produkte, bestimmt (vgl. auch Günther Tegge, Stärke und Stärkederivate, Behr's Verlag, Hamburg 1984, S. 305).

Als Ausgangsstärken zur Herstellung der erfindungsgemäß zu verwendenden verzuckerten Stärken sind prinzipiell alle nativen Stärken wie Getreidestärken (z.B. Mais, Weizen, Reis oder Hirse), Knollen- und Wurzelstärken (z.B. Kartoffeln, Tapiokawurzeln oder Arrowroot) oder Sagostärken geeignet.

Ein wesentlicher Vorzug der erfindungsgemäß zu verwendenden verzuckerten Stärken ist, daß es hinsichtlich ihrer Anwendung, abgesehen von der in einfachster Weise durchzuführenden partiellen Hydrolyse der Ausgangsstärke, zu ihrer Herstellung keiner weiteren chemischen Modifizierung bedarf.

In den Beispielen wurden als verzuckerte Stärken die C* PUR Produkte 01906, 01908, 01910, 01915, 01921, 01924, 01932 oder 01934 der Cerestar Deutschland GmbH, Krefeld, eingesetzt. Sie weisen im wesentlichen alle eine bimodale Molekulargewichtsverteilung auf und sind wie folgt charakterisiert:

| Typ | $M_w$ | U | Gew.-% < 1000 | DE |
|---|---|---|---|---|
| 01906 | 20080 | 10,9 | 12,2 | 2- 5 |
| 01908 | 19290 | 10,0 | 15,9 | 8-10 |
| 01910 | 10540-12640 | 8,5-9,9 | 24,7-26,4 | 11-14 |
| 01915 | 6680-8350 | 6,8-8,4 | 32,9-34,7 | 17-19 |
| 01921 | 6700 | 7,4 | 39,1 | 20-23 |
| 01924 | 4730 | 6,8 | 53.6 | 26-30 |
| 01932 | 4500 | 7,9 | 63,2 | 33-35 |
| 01934 | 3000 | 6,0 | 68,4 | 36-39 |

Bestimmungen von $M_n$ mittels Dampfdruckosmose ergaben für die bevorzugten Typen 01910 und 01915 folgende Werte:

   1560 g/mol (1910)
   980 g/mol (1915)


U       = Uneinheitlichkeit
$M_w$    = Gewichts-Mittelwert des Molekulargewichts
$M_n$    = zahlenmäßiger Mittelwert des Molekulargewichts
DE      = Dextrose-Äquivalent

Für die Umsetzung des Iods und Iodids mit dem Träger im festen Zustand muß der Träger in homogener Form vorliegen. Diese homogene Form kann erzielt werden durch Trocknen der gemeinsamen Lösung der Komponenten, es genügt aber auch, die pulvrigen Komponenten gemeinsam gründlich zu vermahlen. Dies kann nach üblichen Techniken, z.B. mit Kugelmühlen, Intensivmischern, Taumelmischern mit Kugeln usw. erfolgen. Iod und Reduktionsmittel oder Iodid kann anschließend als Feststoff oder Lösung in dem gleichen Gefäß zugemischt werden. Die Komplexbildung geschieht durch Zusatz von soviel Iod und Iodid, daß die Endmischung 6 bis 25, vorzugsweise 15 bis 20 Gew. Iod und pro Mol Iod ($J_2$) 1 Mol Iodid enthält, und anschließendes mehrstündiges Tempern bei 50 bis 110°C. Das Kation des Iodids ist beliebig, in der Regel Natrium oder Kalium. Das Iodid kann durch eine äquivalente Menge eines Reduktionsmittels, das Iod zu Iodid reduziert, beispielsweise Ameisensäure und ihre Salze, vorzugsweise Ammoniumformiat, Glukose, Ascorbinsäure, Malonsäure, Oxalsäure, Ammoniumoxalat, Harnstoff, Harnstoff-$H_2O_2$, Ammoniumcarbaminat ersetzt werden, wenn die Ausgangsiodmenge entsprechend erhöht wird. Dabei ist zu berücksichtigen, daß Dextrine aufgrund ihrer aldehydischen Endgruppen auch ein gewisses Reduktionsvermögen für Iod haben.

Die Gesamtmischung kann, falls sie als Lösung (vorzugsweise in Wasser) vorliegt, in dieser Form in den Handel gebracht und angewendet werden. Meist werden die Iodophore jedoch in Pulverform hergestellt und vertrieben. Die Anwendung als Feindesinfektionsmittel kann ebenfalls in Pulverform oder in wäßriger Lösung erfolgen. Die Wirkung setzt auf jeden Fall erst in Lösung ein, es muß also auch bei trockener Anwendung in irgend einer Form zumindest Feuchtigkeit (bei medizinischer Anwendung z.B. Wundsekret) hinzukommen. Das Iodophor kann auch in Cremes, Aerosole oder Darreichungsformen wie Suppositorien eingearbeitet werden und so zur Anwendung kommen.

Die Gewichtsanteile der fertigen Gesamtmischung (im Fall einer Lösung bezogen auf den Festgehalt) liegen bei 20 bis 71, vorzugsweise 30 bis 60 % PVP oder Poly-N-vinylcaprolactam, 20 bis 71, vorzugsweise 30 bis 60 % Dextrin, 9 bis 37,5 % Iod, wovon jeweils ein Drittel in Form von Iodidionen vorliegt, und 0 bis 900, vorzugsweise 0 bis 500 % Wasser.

Die polymeren Vinyllactame haben K-Werte nach H. Fikentscher (Cellulosechemie 13 (1932), 58 bis 64 und 71 bis 74) im Bereich von 12 bis 100, vorzugsweise 25 bis 70. Auch vernetztes PVP ist für die Herstellung von festem Iodophor einsetzbar und kann mit in Wasser unlöslichen Stärken zu einem Iodkomplex umgesetzt werden und so z.B. als Wundauflage Verwendung finden.

Die Bestimmung des verfügbaren Iodgehaltes erfolgt nach dem Deutschen Arzneimittel Codex (DAC) 1986, 2. Ergänzung 1990, für Polyvidon-Iod. Dort ist der Gehalt zwischen mindestens 9 und höchstens 12 % verfügbarem Iod festgelegt. Gleiches gilt für die USP XXII (Povidone-Iodine). Auch die Bestimmung des Iodid-Gehaltes ist dort beschrieben. Der verfügbare Iodgehalt entspricht dem durch Titration mit Thiosulfat meßbaren Wert. Die Bestimmung des freien Iodgehalts erfolgt nach D. Horn und W. Ditter "PVP-Iod in der operativen Medizin", S. 7 ff., Springer-Verlag, Heidelberg 1984.

Auch der Gesamtgewichtsverlust von höchstens 8 % mit 0,5 g Substanz beim Trocknen im Trockenschrank bei 100 bis 105°C (Trocknungsverlust) ist im DAC 1986, 3. Lieferung 1988, festgelegt und wird von den erfindungsgemäßen Produkten eingehalten.

Der Verlust des verfügbaren Iods (Iodverlust) bei einer Wärmelagerung gibt Aufschluß über die Stabilität des Komplexes und wird wie folgt bestimmt:

Die Bestimmung erfolgt aus einer PVP-Iodlösung, die 1 % verfügbares Iod enthält. Diese wird wie folgt hergestellt: In einem 100 ml Schlifferlenmeyerkolben werden x g PVP-Iod-Probe eingewogen und mit Wasser auf ein Gesamtgewicht von 50 g ergänzt.

Berechnung der einzuwiegenden Menge x in Gramm:

$$x = \frac{5000}{(100 - TV) \cdot VJ}$$

TV   = % Trocknungsverlust nach DAC
VJ   = % Verfügbares Iod nach DAC

Die Lösung wird 3 Stunden lang geschüttelt.

Nach dem Schütteln werden 5,0 ml mit einer geeichten Vollpipette in einen 250 ml Erlenmeyerkolben pipettiert, mit ~ 100 ml dest. Wasser und 1 Tropfen Essigsäure verdünnt und bis zum Endpunkt (farblos bis schwache Gelbfärbung) möglichst rasch mit 0,02 n Natriumthiosulfatlösung titriert (Verbrauch V).

Wärmelagerung

Die PVP-Iodlösung wird bis 1 cm unter dem Stopfen in eine braune 25 ml Schlifflasche gefüllt und anschließend 15 Stunden lang bei 80°C ± 0,5°C im Wärmeschrank gelagert. Etwa 15 Minuten nach Einbringen der Flasche in den Wärmeschrank wird durch Anheben des Stopfens kurz belüftet. Nach 15stündiger Lagerung werden nach Abkühlen des Flascheninhalts 5,0 ml entnommen und der Gehalt an verfügbarem Iod wie im DAC beschrieben mit 0,02 n Natriumthiosulfat-Lösung bestimmt (Verbrauch N).

Berechnung des Iodverlustes

$$\% \text{ Iodverlust} = \frac{V - N}{V} \cdot 100$$

dabei bedeuten:

V   = Verbrauch an $Na_2S_2O_3$-Lösung <u>vor</u> der Lagerung [ml]
N   = Verbrauch an $Na_2S_2O_3$-Lösung <u>nach</u> der Lagerung [ml]

Bemerkung:

Um Unregelmäßigkeiten (Temperaturschwankungen, Stromausfall etc.) während der Lagerung erkennen zu können, ist es zweckmäßig, eine Vergleichsprobe mit bekanntem Iodverlust mit zu analysieren.

Die Dextrine sind allein nicht in der Lage, ausreichend stabile Iodkomplexe zu bilden. Überraschenderweise können sie es aber in Mischung mit PVP oder Poly-N-vinylcaprolactam doch, denn gleiche Mengen der Mischung einerseits und von ungemischtem PVP oder Poly-N-vinylcaprolactam andererseits nehmen gleiche Mengen Iod auf, und zwar mit gleicher Bindungskraft. Es liegt also offenbar bei der Mischung eine Art Synergismus vor. Im Gegensatz zu Propfpolymeren handelt es sich bei den Mischungen um pharmakologisch akzeptierte Produkte. Gegenuber dem PVP-Iod bieten die erfindungsgemäßen Iodophore neben ökologischen Vorzügen, die auf der guten biologischen Abbaubarkeit des Dextrinanteils beruhen, wirtschaftliche Vorteile, da die Einsatzstoffkosten entscheidend reduziert sind. Darüber hinaus genügen die erfindungsgemäßen Iodophore überraschenderweise im Gegensatz zu den bekannten mit andersartigen (Poly-)Sacchariden meist in allen Punkten den Anforderungen der Zulassungsbestimmungen und der Praxis, wie die folgende Tabelle zeigt:

| Vergleich zwischen erfindungsgemäßem PVP-Dextrin-Iod und anderen PVP-Polysaccharid-Iod-Addukten | | | | | |
|---|---|---|---|---|---|
| | | verfügb. Iodgeh. nach DAC % | Iodverlust % | freies Iod ppm | Iodid nach DAC % |
| | Pharmakol. zulässiger bzw. angestrebter Bereich | 9-12 | 1-5 | 3-6 | ≤ 6 |
| Bsp. 1 | | 11,7 | 2,6 | 3,0 | 5,3 |
| Bsp. 2 | | 12,0 | 1,5 | 2,6 | 4,7 |
| Bsp. 3 | | 10,7 | 3,0 | 3,0 | 5,9 |
| Bsp. 4 | | 11,3 | 2,5 | 3,0 | 5,6 |
| Bsp. 5 | | 10,8 | 4,0 | 2,5 | 6,0 |
| Bsp. 6 | | 11,9 | 3,3 | 3,2 | 4,9 |
| Bsp. 7 | | 11,5 | 1,6 | 1,5 | 5,9 |
| Bsp. 8 | | 11,8 | 1,6 | 5,0 | 5,0 |
| Bsp. 9 | | 10,1 | 1,7 | 5,9 | 4,7 |
| Vgl.-Vers. 1 | PVP-Stärke (Zulkowsky*)-Iod | 10,6 | 7,4 | 10 | 17,5 |
| Vgl.-Vers. 2 | α-D-Glukose-PVP-Iod | 13,1 | 28,3 | 50 | - |
| Vgl.-Vers. 3 | Saccharose-PVP-Iod | 13,2 | 15,7 | 30 | - |
| Vgl.-Vers. 4 | α-Cyclodextrin-PVP-Iod | 10,8 | 41,0 | - | - |
| Vgl.-Vers. 5 | β-Cyclodextrin-PVP-Iod | 12,3 | Fällung | - | - |
| Vgl.-Vers. 6 | γ-Cyclodextrin-PVP-Iod | 13,4 | Fällung | - | - |

*) K. Zulkowsky, Ber. d. Deutschen Chem. Ges. Bd. 18 (1980), 1395.

Nachdem die bisher bekannten Streckungsmittel für PVP-Iod, nämlich Zucker, Zuckeralkohole und gelbildende Polysaccharide sowie die aufwendige Polydextrose, keine befriedigende Lösung erbracht hatten, indem sie den Pharma-Zulassungsbestimmungen nicht genügen, war nicht zu erwarten, daß die technisch einfachere Lösung gemäß der Erfindung bessere Ergebnisse liefern könnte. Die Erfindung erschließt somit in überraschend einfacher Weise neue, gegenüber PVP-Iod preiswertere, technisch mindestens gleichwertige Iodophore.

Beispiele

1. Eine Mischung aus gleichen Gewichtsteilen Dextrin mit einem DE-Wert von 17,5 bis 19 und Polyvinylpyrrolidon (K-Wert 30) wurde mit 1,5 % Ammoniumformiat und 17 % Iod, bezogen auf den Polymeranteil, in einem Mischer zunächst 1 h bei Raumtemperatur, dann 20 h bei 70°C gemischt. Der Feststoffgehalt des Pulvers betrug 95,8 %, der verfügbare Iodgehalt 11,7 %, der Iodverlust 2,6 %, der freie Iodgehalt 3,0 ppm, der Iodidgehalt 5,3 %.

2. Eine Mischung aus gleichen Anteilen Dextrin mit einem DE-Wert von 17,5 bis 19 und Polyvinylpyrrolidon (K-Wert 30) wurde mit 1,5 % Ammoniumformiat und 17 % Iod, bezogen auf den Polymeranteil, in einem Mischer zunächst 1 h bei Raumtemperatur, dann 8 h bei 80°C gemischt. Der Feststoffgehalt des Pulvers betrug 97,0 %, der verfügbare Iodgehalt 12,0 %, der Iodverlust 1,5 %, der freie Iodgehalt 2,6 ppm, der Iodidgehalt 4,7 %,

3. Eine Mischung aus gleichen Anteilen Dextrin mit einem DE-Wert von 13 und Polyvinylpyrrolidon (K-Wert 30) wurde mit 1,5 % Ammoniumformiat und 17 % Iod, bezogen auf den Polymeranteil, in einem Mischer zunächst 1 h bei Raumtemperatur, dann 20 h bei 70°C gemischt. Der Feststoffgehalt des Pulvers betrug 96,8 %, der verfügbare Iodgehalt 10,7 %, der Iodverlust 3,0 %, der freie Iodgehalt 3 ppm, der Iodidgehalt 5,9 %.

4. Eine Mischung aus gleichen Anteilen Dextrin mit einem DE-Wert von 10 und Polyvinylpyrrolidon (K-Wert 30) wurde mit 1,5 % Anmoniumformiat und 17 % Iod, bezogen auf den Polymeranteil, in einem Mischer zunächst 1 h bei Raumtemperatur, dann 8 h bei 80°C gemischt. Der Feststoffgehalt des Pulvers betrug 96,5 %, der verfügbare Iodgehalt 11,3 %, der Iodverlust 2,5 %, der freie Iodgehalt 3 ppm, der Iodidgehalt 5,6 %.

5. Eine Losung aus gleichen Anteilen Dextrin mit einem DE-Wert von 10 und Polyvinylpyrrolidon (K-Wert 30) wurde mit 1,5 % Ameisensäure versetzt und sprühgetrocknet. Anschließend wurde mit 15 % Iod versetzt und das Pulver 1 h bei Raumtemperatur und 20 h bei 70°C gemischt. Das Produkt besaß einen Feststoffgehalt von 96,5 %, der verfügbare Iodgehalt betrug 10,8 %, der Iodverlust 4 %, der freie Iodgehalt 2,5 ppm, der Iodidgehalt 6,0 %.

6. Eine Mischung aus Dextrin mit einem DE-Wert von 17,5 bis 19 und Polyvinylpyrrolidon (K-Wert 30) im Gewichtsverhältnis 1,25 : 1 wurde mit 1,5 % Ammoniumformiat und 17 % Iod, bezogen auf den Polymeranteil in einem Mischer zunächst 1 h bei Raumtemperatur, dann 9 h bei 80°C gemischt. Der Feststoffgehalt des Pulvers betrug 95,0 %, der verfügbare Iodgehalt 11,9 %, der Iodverlust 3,3 %, der freie Iodgehalt 3,2 ppm, der Iodidgehalt 4,9 %.

7. Eine Mischung aus Dextrin mit einem DE-Wert von 17,5 bis 19 und Polyvinylpyrrolidon (K-Wert 60) im Verhältnis 1,5 : 1 wurde mit 1,5 % Ammoniumformiat und 17 % Iod, bezogen auf den Polymeranteil, in einem Mischer zunächst 2 h bei Raumtemperatur, dann 8 h bei 80°C gemischt. Der Feststoffgehalt des Pulvers betrug 95,6 %, der verfügbare Iodgehalt 11,5 %, der Iodverlust 1,6 %, der freie Iodgehalt 1,5 ppm, der Iodidgehalt 5,9 %.

8. Eine Mischung aus Dextrin mit einem DE-WErt von 17,5 bis 19 und Polyvinylpyrrolidon (K-WErt 30) im Verhältnis 2 : 1 wurde mit 1,5 % Ammoniumformiat und 17 % Iod, bezogen auf den Polymeranteil, in einem Mischer zunächst 2 h bei Raumtemperatur, dann 8 h bei 80°C gemischt. Der Feststoffgehalt des Pulvers betrug 94,9 %, der verfügbare Iodgehalt 11,8 %, der Iodverlust 1,6 %, der freie Iodgehalt 5 ppm, der Iodidgehalt 5 %.

9. Eine Mischung aus Dextrin mit einem DE-Wert von 17,5 bis 19 und Polyvinylcaprolactam (K-Wert 32) im Verhältnis 1 : 1 wurde mit 1 % Ammoniumformiat und 15 % Iod, bezogen auf den Polymeranteil, in einem Mischer zunächst 1 h bei Raumtemperatur, dann 8 h bei 90°C gemischt. Der Feststoffgehalt des Pulvers betrug 96 %, der verfügbare Iodgehalt 10,1 %, der Iodverlust 1,7 %, der freie Iodgehalt 5,9 ppm, der Iodidgehalt 4,7 %.

## Patentansprüche

1. Iodophor, enthaltend

    a) 20 bis 71 Gew.-% PVP oder Poly-N-vinylcaprolactam,
    b) 20 bis 71 Gew.-% Dextrin vom DE-Wert 2 bis 40,
    c) 6 bis 25 Gew.-% elementares Iod,
    d) 3 bis 12,5 Gew.-% Iodidionen.

2. Flüssiges Iodophor, bestehend aus einer 0,1 bis 40 %igen wäßrigen Lösung eines Iodophors nach Anspruch 1.

3. Iodophor nach Anspruch 1 oder 2, gekennzeichnet durch einen DE-Wert des Dextrins von 10 bis 30.

4. Verfahren zur Herstellung von Iodophoren nach Anspruch 1 durch Mischen der pulverförmigen Komponenten (a) bis (d) oder statt der Iodidionen (d) einer äquivalenten Menge Reduktionsmittel und 3- bis 30stündiges Tempern der Mischung bei 50 bis 110°C.

5. Verfahren zur Herstellung von Iodophoren nach Anspruch 2 durch 3 - bis 30stündiges Erwärmen der gemeinsamen Lösung der Komponenten (a) bis (d) oder statt der Iodidionen (d) einer äquivalenten Menge Reduktionsmittel auf Temperaturen von 50 bis 100°C.

6. Verfahren zur Herstellung von Iodophoren nach Anspruch 1 durch Lösen der Komponenten (a) und (b) in möglichst wenig Wasser, Sprüntrocknen der Lösung, Mischen des erhaltenen Pulvers mit den pulverförmigen Komponenten (c) und (d) oder statt der Iodidionen (d) einer äquivalenten Menge Reduktionsmittel und 3- bis 30stündiges Tempern der Mischung bei 50 bis 90°C.

## Claims

1. An iodophore comprising

a) 20-71 % by weight of PVP or poly-N-vinylcaprolactam,

b) 20-71 % by weight of dextrin of DE 2-40,

c) 6-25 % by weight of elemental iodine,

d) 3-12.5 % by weight of iodide ions.

2. A liquid iodophore composed of a 0.1-40 % strength aqueous solution of an iodophore as claimed in claim 1.

3. An iodophore as claimed in claim 1 or 2, wherein the dextrin has a DE of 10-30.

4. A process for preparing iodophores as claimed in claim 1 by mixing the powdered components (a) to (d), or in place of the iodide ions (d) an equivalent amount of reducing agent, and heating the mixture at 50-110°C for 3-30 hours.

5. A process for preparing iodophores as claimed in claim 2 by heating a solution of components (a) to (d) together, or in place of the iodide ions (d) an equivalent amount of reducing agent, at 50-100°C for 3-30 hours.

6. A process for preparing iodophores as claimed in claim 1 by dissolving components (a) and (b) in the minimal amount of water, spray-drying the solution, mixing the resulting powder with the powdered components (c) and (d), or in place of the iodide ions (d) an equivalent amount of reducing agent, and heating the mixture at 50-90°C for 3-30 hours.

**Revendications**

1. Iodophore, contenant

a) 20 à 71 % en poids de PVP ou de poly-N-vinylcaprolactame,

b) 20 à 71 % en poids de dextrine ayant une valeur d'ED de 2 à 40,

c) 6 à 25 % en poids d'iode élémentaire,

d) 3 à 12,5 % en poids d'ions iodure.

2. Iodophore liquide, consistant en une solution aqueuse à 0,1 à 40 % d'un iodophore selon la revendication 1.

3. Iodophore selon la revendication 2 ou 3, caractérisé par une valeur d'ED de la dextrine de 10 à 30.

4. Procédé pour la préparation d'iodophores selon la revendication 1 par mélange des composants (a) à (d) sous forme pulvérulente ou, à la place des ions iodure (d), d'une quantité équivalente d'agent de réduction et maturation pendant 3 à 30 heures du mélange entre 50 et 110°C.

5. Procédé pour la préparation d'iodophores selon la revendication 2 par chauffage pendant 3 à 30 heures de la solution d'ensemble des composants (a) à (d) ou, à la place des ions iodure (d), d'une quantité équivalente d'agent de réduction à des températures de 50 à 100°C.

6. Procédé pour la préparation d'iodophores selon la revendication 1 par dissolution des composants (a) et (b) dans le moins possible d'eau, séchage par pulvérisation de la solution, mélange de la poudre obtenue avec les composants (c) et (d) sous forme pulvérulente ou, à la place des ions iodure (d), une quantité équivalente d'agent de réduction et maturation du mélange pendant 3 à 30 heures entre 50 et 90°C.